# EUROPÄISCHE PATENTSCHRIFT

(11) **EP 1 917 116 B1**
(45) Veröffentlichungstag und Bekanntmachung des Hinweises auf die Patenterteilung: **03.06.2009**
(21) Anmeldenummer: 06775901.9
(22) Anmeldetag: 17.08.2006
(51) Int. Cl.: B22F 3/11, C04B 38/00, B22F 1/00, C03C 11/00

(54) **KALZINIERTER ODER GESINTERTER HOHLKÖRPER MIT SPHÄRISCH GEKRÜMMTER OBERFLÄCHE**
CALCINATED OR SINTERED HOLLOW BODY COMPRISING A SPHERICALLY CURVED SURFACE
CORPS CREUX CALCINE OU FRITTE PRESENTANT UNE SURFACE COURBEE DE FAÇON SPHERIQUE

(30) Priorität: 19.08.2005 DE 102005040599
(43) Veröffentlichungstag der Anmeldung: 07.05.2008
(73) Patentinhaber: Glatt Systemtechnik GmbH, 01277 Dresden (DE)
(72) Erfinder: KRETZSCHMAR, Ralf, 01309 Dresden (DE); HUNGERBACH, Wolfgang, 79379 Müllheim (DE); BINGEL, Gert, 01324 Dresden (DE)
(74) Vertreter: Pfenning, Meinig & Partner GbR
(86) Internationale Anmeldenummer: PCT/DE2006/001483
(87) Internationale Veröffentlichungsnummer: WO 2007/019846

(56) Entgegenhaltungen:
- EP-A2- 0 811 359
- WO-A-00/42991
- AT-U1- 6 556
- DE-A1- 4 403 509
- DE-A1- 19 929 760
- US-A- 5 212 143
- US-A1- 2003 153 981

## Beschreibung

Die Erfindung betrifft ein Verfahren zur Herstellung kalzinierter oder gesinterter Hohlkörper mit sphärischer Oberfläche und Verwendungen so hergestellter Hohlkörper. Die erfindungsgemäß hergestellten Hohlkörper können Schalen aus nahezu allen möglichen Werkstoffen, die gesintert werden können, aufweisen. Die Schalen können daher aus Metallen, Metalllegierungen oder auch Keramiken gebildet sein.

Solche Hohlkörper sind an sich bekannt und können, wie dies unter anderem in EP 1 251 985 A1 oder auch in DE 199 29 760 A1 beschrieben ist ausgebildet sein und auch so hergestellt werden.

Dabei weisen solche kugelförmigen Hohlkörper vorteilhafte Eigenschaften, wie hohe mechanische Festigkeit bei gleichzeitig reduzierter Masse auf. Ihre äußere Oberfläche ist insbesondere wegen der Kugelform ebenfalls relativ groß und auch wenn die Schale eine gewisse Porosität aufweist, sind die äußeren Oberflächen relativ eben und glatt, mit entsprechender Oberflächenrauhigkeit.

Für viele Anwendungen genügen diese Parameter jedoch nicht.

Aus US 5,212,143 sind hohle poröse Mikrosphären bekannt, deren Schalen auch durchbrochen sein können.

In EP 0 811 359 A2 ist ein Verbundwerkstoff und ein Verfahren zur Herstellung solcher Werkstoffe offenbart.

Es ist daher Aufgabe der Erfindung, kalzinierte oder gesinterte Hohlkörper mit sphärisch gekrümmter Oberfläche zur Verfügung zu stellen, die eine vergrößerte frei zugängliche Oberfläche und/oder eine strukturierte Oberfläche aufweisen.

Erfindungsgemäß wird diese Aufgabe mit einem Verfahren nach Anspruch 1 gelöst.

Vorteilhafte Ausgestaltungen und Weiterbildungen können mit den in den untergeordneten Ansprüchen genannten Merkmalen erreicht werden.

Insbesondere zur Vergrößerung der für Fluide frei zugänglichen Oberfläche ist an erfindungsgemäß hergestellten Hohlkörpern mindestens eine Durchbrechung vorhanden, die durch die gesamte Dicke der Schale von Hohlkörpern geführt ist, so dass Fluide auch auf die innere Oberfläche von Schalen der Hohlkörper auftreffen können. Dabei reduzieren sich.die ansonsten bereits vorteilhaften Eigenschaften, insbesondere deren mechanische Festigkeit, nur unerheblich.

Die Anzahl und freien Querschnitte solcher Durchbrechungen kann gezielt beeinflusst werden, worauf noch zurück zu kommen sein wird.

Günstig ist es mehr als eine Durchbrechung an einem Hohlkörper vorzusehen, um einen erleichterten Fluidaustausch oder auch Druckausgleich zwischen der Umgebung und dem Inneren der Hohlkörper zu erreichen.

Dies kann aber auch dadurch erreicht werden, dass der Schalenwerkstoff der Hohlkörper eine Porosität von mindestens 90 % aufweist. Dabei soll der Anteil von einer oder mehrerer Durchbrechungen an der gesamt Porosität unberücksichtigt bleiben. Auch eine ggf. hohe Porosität soll nicht mit den erfindungsgemäß erforderlichen Durchbrechungen vergleichbar sein.

Je nach gewünschter Anwendung besteht die Möglichkeit Durchbrechungen stochastisch oder regelmäßig über der Oberfläche bzw. den Umfang von Hohlkörpern verteilt anzuordnen.

Außerdem können die Größe und geometrischen Gestaltungen der freien Querschnitte von Durchbrechungen beeinflusst und der jeweiligen Applikation angepasst werden.

So können freie Querschnitte spaltförmig, kreis-, kreisringförmig, rechteckig bis quadratisch, sechseckig, achteckig oder auch in Form von anderen Vielecken ausgebildet werden. Dabei können an einem Hohlkörper auch unterschiedliche Geometrien von freien Querschnitten der Durchbrechungen vorhanden sein.

Für bestimmte Anwendungen kann es vorteilhaft sein, dass mindestens zwei Durchbrechungen sich diametral gegenüberliegend an einem Hohlkörper angeordnet und dort ausgebildet sind.

Die äußeren Durchmesser sowie die Dicke der Schalen von Hohlkörpern kann so gewählt und beeinflusst werden, wie dies bei den Bekannten mit geschlossener Schale auch der Fall ist.

Die Hohlkörper werden mit einigen Modifikationen erfindungsgemäß so hergestellt, wie dies auch aus dem Stand der Technik bereits bekannt ist. So wird ein sphärischer Träger aus einem organischen Stoff mit einer Suspension, die mit einem Binder und einem kalzinierbaren oder sinterbaren Pulver gebildet ist, beschichtet. Die Schichtdicke auf der Oberfläche und das Pulver beeinflussen dann die Dicke der Schale, den Außendurchmesser und die Porosität bzw. Oberflächenrauheit des fertig gesinterten Hohlkörpers. Wobei natürlich auch der Außendurchmesser des Trägers Einfluss auf den Außendurchmesser hat.

Der Pulverwerkstoff an sich und die Sinteraktivität des eingesetzten Pulvers sind ebenfalls Parameter zur Beeinflussung der Eigenschaften eines Hohlkörpers.

Für die Ausbildung von Durchbrechungen an Hohlkörpern können Erhebungen auf den Trägern allein angeordnet, darauf ausgebildet sein bzw. zusätzlich Platzhalter in die Beschichtung auf der Oberfläche des organischen Trägers eingebettet werden. Solche Platzhalter können dabei bereits in der Suspension, mit der die Oberfläche eines organischen Trägers, beispielsweise Träger aus Styropor, beschichtet wird, enthalten sein.

Erhebungen können unmittelbar auf der Oberfläche organischer Träger ausgebildet sein. Dies kann beispielsweise durch eine gezielte Formgebung von Trägern erreicht werden. Bei Trägern aus einem Kunststoff kann dies in an sich bekannter Weise z.B. durch Spritzgießen erfolgen. Werden Träger aus Styropor eingesetzt, können diese in entsprechend konturierten Formwerkzeugen vor- oder auch nachgeschäumt werden.

Es besteht aber auch die Möglichkeit Erhebungen nachträglich auf der Oberfläche solcher Träger anzuordnen und zu fixieren. So kann beispielsweise ein dünner Binderfilm auf die Oberfläche organischer Träger aufgebracht werden. Mit diesem Binder können dann Erhebungen bildende Partikel oder andere Elemente darauf fixiert werden, bevor die Suspension mit dem die Schale nach dem Sintern bildenden Pulver aufgebracht wird. Solche Erhebungen bildenden Elemente können dann lokal definiert an bestimmten gewünschten Positionen der Oberfläche eines Trägers aber auch, beispielsweise durch Eintauchen in oder Bestreuen mit Partikeln, stochastisch verteilt erfolgen.

Erhebungen können aber auch mit Elementen, die beispielsweise in die Oberfläche eines organischen Trägers (z.B. Styroporträgers) eingesteckt worden sind, gebildet werden.

Die Erhebungen bildenden Teile, Elemente oder auch Partikel sowie die Platzhalter können aus einem Stoff oder Stoffgemisch gebildet sein, das ähnlich wie der organische Träger bei der Wärmebehandlung pyrolisiert, also in die Gasphase überführt werden können, wobei dies unterhalb der jeweiligen Sintertemperatur erfolgen sollte.

Es können aber auch Stoffe bzw. Stoffgemische eingesetzt werden, die bei der Wärmebehandlung bestimmte Eigenschaften verändern. Dies kann beispielsweise die Reduzierung der Festigkeit sein. Dabei kann dann die eine oder mehrere Durchbrechung(en) nach dem Sintern mechanisch entfernt werden, ohne dass der Hohlkörper zerstört oder beschädigt wird.

Weist der Stoff oder das Stoffgemisch einen vom Schalenwerkstoff des jeweiligen Hohlkörpers geeigneten Wärmeausdehnungskoeffizienten auf, kann dieser beim Abkühlen einfach aus der Schale herausfallen und die jeweilige Durchbrechung ist dann freigegeben.

Die Erhebungen oder Platzhalter sollen dabei entsprechend dimensioniert sein, um die Durchbrechungen ausbilden zu können. So sollen Erhebungen einen Höhenüberstand auf der Oberfläche und Platzhalter Volumina aufweisen, die zumindest der Dicke der Schale des fertig kalzinierten oder gesinterten Hohlkörpers entspricht, also das jeweilige Schwindmaß beim Sintern berücksichtigt werden kann.

Platzhalter können neben unterschiedlichen der jeweiligen Applikation angepassten Dimensionierung auch unterschiedlich gestaltet sein. So können beispielsweise faserförmige Platzhalter für spaltförmige Durchbrechungen eingesetzt werden. Es können aber auch Partikel als Platzhalter in geeigneter Korngröße genutzt werden:

Die erfindungsgemäßen Hohlkörper mit sphärisch gekrümmter Oberfläche können für die Herstellung unterschiedlicher Endprodukte aber auch an.sich für verschiedene Anwendungen, im letzt genannten Fall beispielsweise als lose Schüttung solcher Hohlkörper eingesetzt werden.

So können sie bei Katalysatoren, als Katalysatorträger eingesetzt werden. Aus bzw. mit den erfindungsgemäßen Hohlkörpern können auch Filter oder Schalldämpfer hergestellt werden. Mehrere Hohlkörper können dabei bevorzugt stoffschlüssig miteinander verbunden werden, wobei dann zumindest nicht alle Durchbrechungen an Hohlkörpern verschlossen werden sollten.

Mit den erfindungsgemäßen Hohlkörpern kann bei der Durchströmung einer Schüttung oder Struktur aus den Hohlkörpern von Flüssigkeiten oder Gasen der Druckverlust und der Strömungswiderstand reduziert werden. Dies ist insbesondere bei der Durchströmung von Abgasen aus Verbrennungskraftmaschinen vorteilhaft, da der Abgasgegendruck entsprechend reduziert werden kann, was sich günstig auf die Leistung und den Wirkungsgrad der Verbrennungskraftmaschine auswirkt.

Bei einem Einsatz als oder für Katalysator(en) wirkt sich die vergrößerte frei zugängliche Oberfläche außen und innen in günstiger Weise aus, so dass die katalytische Wirkung verbessert werden kann.

Werden Schalldämpfer mit erfindungsgemäßen Hohlkörpern hergestellt kann ein Einsatz unterschiedlich ausgebildeter (Anzahl und Größe von Durchbrechungen, Porosität) und/oder in ihrer Dimensionierung verschiedener Hohlkörper sowie ein Einsatz mit herkömmlichen Hohlkörpern, die dann eine vollständig geschlossene Schale aufweisen, zu einer verbesserten Schalldämpfung beitragen.

Werden erfindungsgemäß hergestellte Hohlkörper in chemischen Prozessen eingesetzt, kann die Reaktivität, das Absorptionsvermögen, eine katalytische Wirkung oder auch das Separationsvermögen verbessert werden. Dabei ist auch eine geeignete Porosität der Schalen vorteilhaft. Der Werkstoffeinsatz kann reduziert und entsprechende Anlagentechnik kleiner dimensioniert werden.

Erfindungsgemäß hergestellte Hohlkörper können aber auch für die Herstellung von Implantaten Für Menschen und Tiere eingesetzt werden. In diesen Fällen kann Gewebe deutlich besser in die aus bzw. mit erfindungsgemäßen Hohlkörpern gebildete Implantarstfuktur sowie die freien Durchbrechungen einwachsen, so dass ein verbesserter festerer Verbund eines solchen Implantats an Knochen erreichbar ist. Die Festigkeit ist, wie bereits angesprochen durch die erfindungsgemäß vorhandenen Durchbrechungen nur geringfügig reduziert. Werden aber solche Implantate als Knochenersatz hergestellt, können diese Implantate sowohl mit erfindungsgemäßen Hohlkörpern, die dann bevorzugt außen und ggf. im inneren Kern angeordnet sind, auch gemeinsam mit herkömmlichen, geschlossenen Schalen aufweisenden Hohlkörpern hergestellt werden. Dadurch kann eine Formstabilität und Festigkeit eines Implantates erreicht werden, die auch hohen Belastungen widerstehen kann.

Es ist auch eine Anpassung an unterschiedliche lokale Anforderungen, insbesondere durch gezielte Beeinflussung des E-Moduls an Implantaten möglich.

Außerdem kann festgehalten werden, dass mit erfindungsgemäßen Hohlkörpern eine Massereduzierung möglich ist. Sie können auch elektrisch leitend, magnetisierbar und pneumatisch transportierbar sein.

## Patentansprüche

1. Verfahren zur Herstellung von kalzinierten oder gesinterten Hohlkörpern mit sphärisch gekrümmter Oberfläche, bei dem ein organischer sphärischer Träger mit einem Pulver, das die Schale eines Hohlkörpers bildet, sowie einem Binder beschichtet wird und nachfolgend eine Wärmebehandlung, die zum Austreiben organischer Bestandteile und zur Sinterung führt, durchgeführt wird,
**dadurch gekennzeichnet, dass** auf der Oberfläche des Trägers mindestens eine Erhebung angeordnet, darauf ausgebildet ist und/oder
mindestens ein Platzhalter in die aus dem Pulver und Binder gebildete Beschichtung eingebettet wird, wobei der Höhenüberstand der Erhebung(en) über die Oberfläche oder das Volumen eines oder mehrerer Platzhalter unter Berücksichtigung des Schwindmaßes des Pulverwerkstoffes beim Sintern, zumindest der Dicke der Schale des fertig gesinterten Hohlkörpers entspricht/entsprechen; und die Erhebung(en) und/oder Platzhalter bei der Wärmebehandlung in die Gasphase des jeweiligen Stoffes, aus dem sie gebildet sind, überführt und/oder mechanisch entfernt werden.

2. Verfahren nach Anspruch 1**, dadurch gekennzeichnet, dass** Platzhalter in Partikelform oder faserförmige Platzhalter eingebettet werden.

3. Verfahren nach Anspruch 1 oder 2, **dadurch gekennzeichnet, dass** ein Träger mit einer Erhebungen aufweisenden Oberflächenkontur beschichtet wird.

4. Verfahren nach einem der vorhergehenden Ansprüche, **dadurch gekennzeichnet, dass** Platzhalter mit unterschiedlichen Volumina und/oder unterschiedlicher geometrischer Gestalt in die Beschichtung eingebettet werden.

5. Verfahren nach einem der Ansprüche 1 bis 4, **dadurch gekennzeichnet, dass** Träger mit unterschiedlich dimensionierten und/oder gestalteten Erhebungen beschichtet werden.

6. Verfahren nach einem der Ansprüche 1 bis 5, **dadurch gekennzeichnet, dass** Platzhalter aus einem organischen Stoff oder Stoffgemisch eingebettet werden.

## Claims

1. A method of producing calcinated or sintered hollow bodies with a spherically curved surface, in which an organic spherical carrier is coated with a powder, which forms the shell of a hollow body, and a binder, and after that a heat treatment is carried out which leads to the expulsion of organic constituents and to sintering, **characterized in that** at least one raised portion is provided on the surface of the carrier or is formed on the latter and/or at least one placeholder is embedded in the coating formed from the powder and the binder, wherein the vertical projection of the raised portion or portions beyond the surface or the volume of one or more placeholders corresponds or correspond to at least the thickness of the shell of the finished sintered hollow body whilst taking into consideration the degree of shrinkage of the material in the form of a powder during the sintering, and during the heat treatment the raised portion or portions and/or the placeholder or placeholders is or are converted into the gas phase of the respective substance from which they are formed, and/or is or are removed mechanically.

2. A method according to Claim 1, **characterized in that** placeholders in the form of particles or placeholders in the form of fibres are embedded.

3. A method according to Claim 1 or 2, **characterized in that** a carrier with a surface contour having raised portions is coated.

4. A method according to any one of the preceding Claims, **characterized in that** placeholders with different volumes and/or a different geometrical shape are embedded in the coating.

5. A method according to any one of Claims 1 to 4, **characterized in that** carriers with raised portions of different dimensions and/or different shapes are coated.

6. A method according to any one of Claims 1 to 5, **characterized in that** placeholders of an organic substance or mixtures of substances are embedded.

## Revendications

1. Procédé de fabrication de corps creux calcinés ou frittés avec une surface à courbure sphérique, dans lequel un support sphérique organique est recouvert d'une poudre qui forme la coque d'un corps creux, ainsi que d'un liant, et par la suite, un traitement thermique est exécuté qui conduit à l'expulsion de composants organiques et au frittage,
**caractérisé en ce qu'**à la surface du support, au moins une bosse est disposée, réalisée sur celle-ci et/ou au moins un élément à remplacer est incorporé dans le revêtement formé par la poudre et le liant, dans lequel le dépassement en hauteur de la ou des bosses au-dessus de la surface, ou le volume d'un ou de plusieurs éléments à remplacer correspond(ent), en tenant compte du retrait de la matière pulvérulente lors du frittage, au moins à l'épaisseur de la coque du corps creux fritté fini ; et au cours du traitement thermique, la ou les bosses et/ou le ou les éléments à remplacer sont amenés à la phase gazeuse de la matière respective dont ils sont formés et/ou ils sont retirés mécaniquement.

2. Procédé selon la revendication 1, **caractérisé en ce que** des éléments à remplacer sous forme de particules ou des éléments à remplacer sous forme de fibres sont incorporés.

3. Procédé selon la revendication 1 ou 2, **caractérisé en ce qu'**un support est recouvert d'un contour de surface présentant des bosses.

4. Procédé selon l'une quelconque des revendications précédentes, **caractérisé en ce que** des éléments à remplacer de différents volumes et/ou de différentes formes géométriques sont incorporés dans le revêtement.

5. Procédé selon l'une quelconque des revendications 1 à 4, **caractérisé en ce que** des supports sont recouverts de bosses de différentes dimensions et/ou formes.

6. Procédé selon l'une quelconque des revendications 1 à 5, **caractérisé en ce que** des éléments à remplacer d'une matière organique ou d'un mélange de matières sont incorporés.
